(19)

Europäisches
Patentamt
European
Patent Office
Office européen
des brevets

(11) **EP 3 059 664 A1**

(12) **EUROPEAN PATENT APPLICATION**

(43) Date of publication:
   **24.08.2016  Bulletin 2016/34**

(51) Int Cl.:
   ***G06F 3/01*** *(2006.01)*        ***G06K 9/46*** *(2006.01)*

(21) Application number: **16156968.6**

(22) Date of filing: **23.02.2016**

<table>
<tr><td>

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **MA MD**

(30) Priority:  **23.02.2015  PL 41133915**

(71) Applicant: **Samsung Electronics Polska Spolka z organiczona odpowiedzialnoscia 02-674 Warszawa (PL)**

</td><td>

(72) Inventors:
   • **Chmielewski, Radoslaw Pawel 93-509 Lodz (PL)**
   • **Kornatowski, Lukasz 94-109 Lodz (PL)**

(74) Representative: **Eupatent.pl ul. Zeligowskiego 3/5 90-752 Lodz (PL)**

</td></tr>
</table>

(54)   **A METHOD FOR CONTROLLING A DEVICE BY GESTURES AND A SYSTEM FOR CONTROLLING A DEVICE BY GESTURES**

(57)   A method for controlling a device (101) by user gestures, the device (101) comprising a processing unit (110) connected to a sensor (103) configured to measure a depth of a monitored region in front of the device (101), the method being characterized by performing the following steps by the processing unit (110): determining a detection plane (102) for the device (101) in a three-dimensional space; acquiring an image of the monitored region received from the sensor (103); determining, in the acquired image, a first reference point (106, 107) and its position in the three-dimensional space; determining, in the acquired image, a second reference point (105, 108) and its position in the three-dimensional space; generating a straight line that passes through the first reference point (106, 107) and the second reference point (105, 108); and checking if the straight line intersects the detection plane (102) and if so, calling a command for the controlled device (101).

Fig. 1

**Description**

TECHNICAL FIELD

The present disclosure relates to a method for controlling a device by gestures and a system for controlling a device by gestures.

BACKGROUND

Gesture control of machines, including computers, is under intensive development. Examples of known systems include Microsoft Kinect or Sony PlayStation Eye, which allow interacting with a variety of appliances, such as tv sets.

Gesture control of mobile devices, such as tablets or smartphones, can be problematic due to varying environment conditions, such as varying ambient light and background.

Typical gesture recognition systems utilize a two-dimensional camera, which needs to be calibrated and is typically relatively slow. Moreover, it requires the user to keep a palm in a field of view of the camera while controlling the mobile device. The palm movements to be captured by the camera must be of a significant scope. Such systems require relatively high level of skill from the user and may cause rapid tiredness of the user.

There are also known systems that track a direction of user's sight. However, such systems are difficult to calibrate and are not precise enough to control sophisticated user interfaces. Moreover, they require the user to focus the sight on a particular point for a relatively long time, which is difficult.

There is a need to provide an alternative method and system for gesture-based controlling of a device, which would be intuitive and simple to use.

SUMMARY

There is presented a method for controlling a device by user gestures, the device comprising a processing unit connected to a sensor configured to measure a depth of a monitored region in front of the device, the method being characterized by performing the following steps by the processing unit : determining a detection plane for the device in a three-dimensional space; acquiring an image of the monitored region received from the sensor; determining, in the acquired image, a first reference point and its position in the three-dimensional space; determining, in the acquired image, a second reference point and its position in the three-dimensional space; generating a straight line that passes through the first reference point and the second reference point; and checking if the straight line intersects the detection plane and if so, calling a command for the controlled device.

The detection plane may correspond to a screen surface of the controlled device.

The first reference point can be a position of a pupil, a position of a dominant eye or a position of a user.

The second reference point can be a tip of an index finger or of a pointer.

The method may further comprise projecting intersection coordinates in the three-dimensional space on two-dimensional coordinates of the detection plane.

The method may further comprise sending the two-dimensional coordinates to the controlled device.

The method may comprise detecting the first reference point on the basis of Haar-like features.

There is also disclosed a system for a controlling a device by user gestures, wherein the device comprises a processing unit connected to a sensor configured to measure a depth of a monitored region in front of the device, characterized in that the processing unit is configured to performing the steps of the following method: determining a detection plane for the device in a three-dimensional space; acquiring an image of the monitored region received from the sensor ; determining, in the acquired image, a first reference point and its position in the three-dimensional space; determining, in the acquired image, a second reference point and its position in the three-dimensional space; generating a straight line that passes through the first reference point and the second reference point ; and checking if the straight line intersects the detection plane and if so, calling a command for the controlled device.

The sensor may comprise a TOF camera and an RGB camera.

The sensor may comprise a stereoscopic camera.

BRIEF DESCRIPTION OF DRAWINGS

The system and method are shown by means of example embodiments on a drawing, in which:

Fig. 1 shows a system for controlling a device by gestures.
Fig. 2 shows a method for detecting a first and a second reference point.
Fig. 3 shows a projection of intersection coordinates in a three-dimensional space on the coordinates on two-dimensional surface of a device.
Fig. 4 shows an example of a depth map.
Fig. 5 shows an example of a filtered depth map.
Fig. 6 shows a method for detecting a tip of an index finger or of a pointer.
Fig. 7 show examples of results of the method of Fig. 6.

DETAILED DESCRIPTION

The present disclosure relates to interaction with a graphical user interface (GUI) of devices such as Smart TVs or smartphones. Moreover, the presented system may be used for controlling other electronic appliances, such as window blinds, lamp switches, door locks, gate locks and similar. Such devices, although they typically do not have a display with a graphical user interface, can be switched between their states (for example, they can be switched on and off or switched cyclically switch between a plurality of states) in response to a gesture.

The devices can be interacted with from a certain distance by an intuitive interface, by indicating a region of interest using user's index finger, which is intuitive and natural to users. The system allows a significant reduction of reaction time of the user to displayed information, by eliminating the necessity to follow a cursor on a screen.

The presented system allows indicating objects by a finger (in particular, a fingertip) or, in an alternative embodiment, by a particular element of a pointing device. It is an intuitive, natural way of indicating - if a user wants to indicate an object, the user points at it by the finger or the pointing device.

The system involves three-point guidance of a virtual straight line for controlling a gesture and increased precision of touchless control. From the point of view of geometry, the main problem is to detect the fingertip or the pointer tip and the user's eye, and next to generate the virtual straight line to a surface of a controlled device (a detection plane).

In the presented system, a straight line is considered as a particular case of a curve that is now limited at both sides, and has an infinite radius of curvature at each of its points. Solutions based on a half-line or on a line segment are considered as an equivalent of the straight line as described herein.

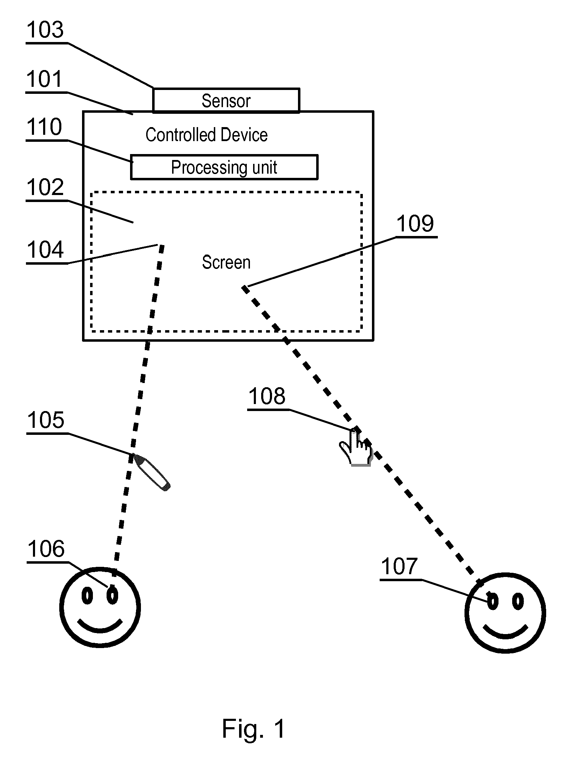

Fig. 1 shows a system for controlling a device by gestures. The controlled device 101, for example an on/off switch or a TV set, has a particular surface, which is known and will be further referred to as a detection plane (for example, a two-dimensional rectangle corresponding to a front surface of the device). In a particular case, the controlled device 101 can have a screen 102 - then, the detection plane may be an active surface of the screen 102.

The controlled device 101 has at least one sensor 103 assigned thereto. Preferably, the sensor 103 registers an image and information about a depth of a region in front of the device. For example, the sensor 103 may be a TOF (Time of Flight) camera, which determines the distance between its lens and an observed region and calculates a time of flight of a light signal between the lens and each of monitored points of the observed region. Various known TOF cameras can be used, for example Kinect available from Microsoft or Senz3D available from Creative. The camera further comprises an accelerometer 131 for calculating the angle of inclination of the camera with respect to the vector of gravity. Other types of cameras can be used as well, for example LIDAR (Light Detection and Ranging) cameras, stereoscopic cameras or pattern projectors. Data from the sensor 103 are used to calculate the distance from the object.

The sensor 103 may also comprise a plurality of individual sensors, for example an RGB (Red/Green/Blue) camera and a TOF camera. In other embodiments, the sensor 103 can be a stereoscopic camera with a depth map generating module.

The device comprises a processing unit 110 for processing data, comprising a memory and a processor for processing data from the sensor 103 in order to determine coordinates indicated by a user.

In other words, the sensor 103 is adapted to register an image of a monitored region, in which a user is present, wherein the registered image allows detecting registered objects and comprises information about location of objects in a three-dimensional space. The detection is performed by appropriate image processing methods.

Preferably, the sensor plane has its axis corresponding to the axis of the front plane of the device 101 or the screen 102. It is, however, sufficient to know the position of the sensor plane with respect to the front plane of the device 101 or the screen 102. Preferably, the sensor is located at a top edge of the controlled device 101. It allows a good visibility of the user's palm and head, which could be problematic if the sensor 103 was mounted for example at a bottom edge of the controlled device 101 (then the user's palm could obscure the user's head).

The following points are determined in the image: a first reference point 106, 107, preferably the user's eye, and a second reference point 105, 108, preferably the tip of the user's index finger. In an alternative embodiment, the second reference point may be a tip of a pointing device 105. The tip of the pointing device may have an color adapted to be easy to detect in the image or may emit special radiation detectable by the sensor 103. Therefore, the tip of the pointing device 105 may be passive or active.

When determining in the three-dimensional image the first and the second reference point, a virtual straight line is created in the monitored space, that passes through these two points. If the straight line intersects the defined surface of the controlled device 101, then the system calls a command for the controlled device 101, for example a command informing that that particular device was indicated. A controller of the device performs further actions corresponding to its indication by the user. If the controlled device 101 has a screen 102 with a defined and known height and width, then the intersection point of the virtual straight line with the plane of the screen 102 may determine coordinates in a graphical user interface. The coordinates may be passed to the operating system of the controlled device 101.

In an alternative embodiment, pairs of the first and the second reference points can be detected, in order to handle several users simultaneously. Moreover, in a way equivalent to a single first reference point 106, 107, it is possible to detect more than one second reference point 105, 108, which allows controlling the device 101 with two palms or with one palm using for example a thumb and an index finger, in a way similar to controlling touch screens.

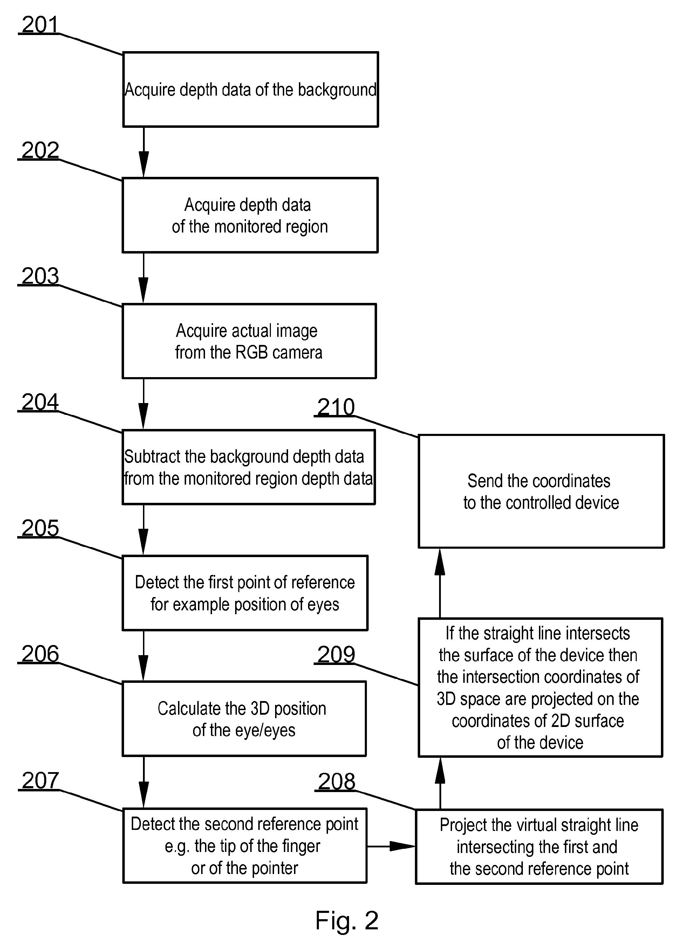

Fig. 2 shows a method for detecting the first and the second reference point. It is important to detect the first and the second reference point in the monitored three-dimensional space. For this purpose, unnecessary points may be filtered out from the depth data.

The system may use two coordinate systems. The first one can be a metric coordinate system of the room in which the system operates. This coordinate system is associated with the TOF camera, wherein the TOF camera is preferably located in the origin of the coordinate system, where the values in axes x, y, and z are equal to zero.

The second coordinate system can be present when the controlled device 101 has the screen 102. In such a case, the second coordinate system can be a two-dimensional system, whose units are pixels of the screen. In this case, the zero coordinates can be located in the upper left corner of the screen 102.

The process starts in step 201, wherein depth data of a background are acquired by the TOF camera. For this purpose, data of the monitored region are acquired while the user is absent, so that the region contains only static objects.

Next, in step 202, the depth data of the monitored region are acquired by the TOF camera. Now the user may be present in the monitored region and perform pointing movements by the finger or by the pointer.

Next, in step 203, the actual image from the RGB camera is acquired. Next, in step 204, the background depth data acquired in step 201 are subtracted from the monitored region depth data acquired in step 202 to obtain filtered data representing varying elements, i.e. a user's silhouette.

In step 205, the first reference point is detected in the RGB image, for example an eye or eyes are detected on the basis of Haar-like features. Knowing the position of the eye or the eyes in the RGB image, it is possible, on the basis of the depth data, to calculate the position of the eye or the eyes in the three-dimensional space in step 206. If the RGB camera or the TOF camera have a similar or the same resolution, it is enough to read the depth value from the TOF data for the coordinates from the RGB image, in which the eye or the eyes were detected. If the resolutions are different, then projection or estimation needs to be performed.

In another embodiment, instead of Haar-like features, other known techniques of objects detection in images may be used. In an alternative embodiment, a pupil or pupils of eyes can be detected.

If both pupils are detected, then finally only one is to be selected. In one embodiment, a point between the pupils may be selected for final coordinates. However, such a solution may be not accurate enough and may not give satisfactory results when the user is in a vicinity of the controlled device. A better method is to determine a dominant eye. The dominant eye may be indicated as a system parameter.

The dominant eye may also be detected when the user is close to the controlled device 101, for example at a distance of one meter. Then, a relatively small GUI element can be displayed and the system may ask the user to indicate the dominant eye. Checking the straight lines passing respectively through the right and the left eye, it is possible to detect which of this straight lines intersects the displayed GUI element and to select the dominant eye on this basis.

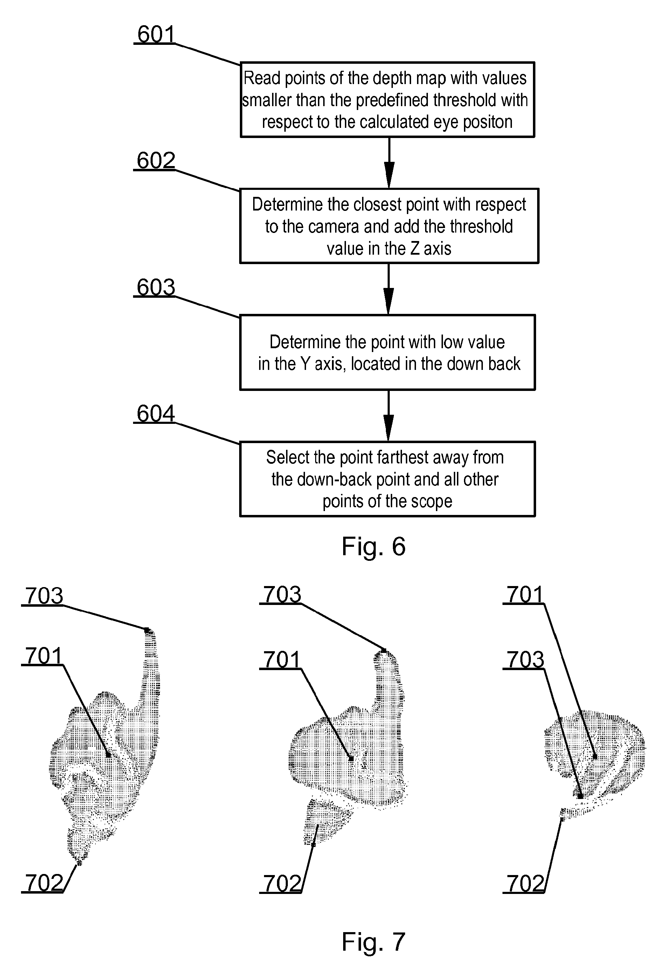

Next, in step 207, the second reference point is detected in a way similar to detecting the first reference point, for example the tip of the finger or of the pointer and its position in the three-dimensional space. For this purpose, algorithms for detecting objects in images may be used, and optionally an assumption that the tip of the index finger or of the pointer is located closest to the sensor (an example of a detection method is shown in Fig. 6).

Next, in step 208, the virtual straight line intersecting the first and the second reference point is projected on the coordinate system of the room.

If the straight line intersects the surface of the controlled device 101, then the coordinates of the intersection of the three-dimensional space are projected 209 on the coordinates of the two-dimensional surface of the device 101.

In step 210, the two-dimensional coordinates are sent to the controlled device 101. In case when the two-dimensional coordinates are not relevant for the controlled device 101, this step may be omitted (for example, for a switch without a display, only the indication of intersection of the straight line with the plane of the switch is important).

The system may identify or track movements of the palm, which can be translated to control commands for the controlled device 101. An example of the control command may be a "click" performed as a fast movement of the tip of the index finger or of the pointer, first in the direction towards the sensor 103 and next in the direction away from the sensor 103.

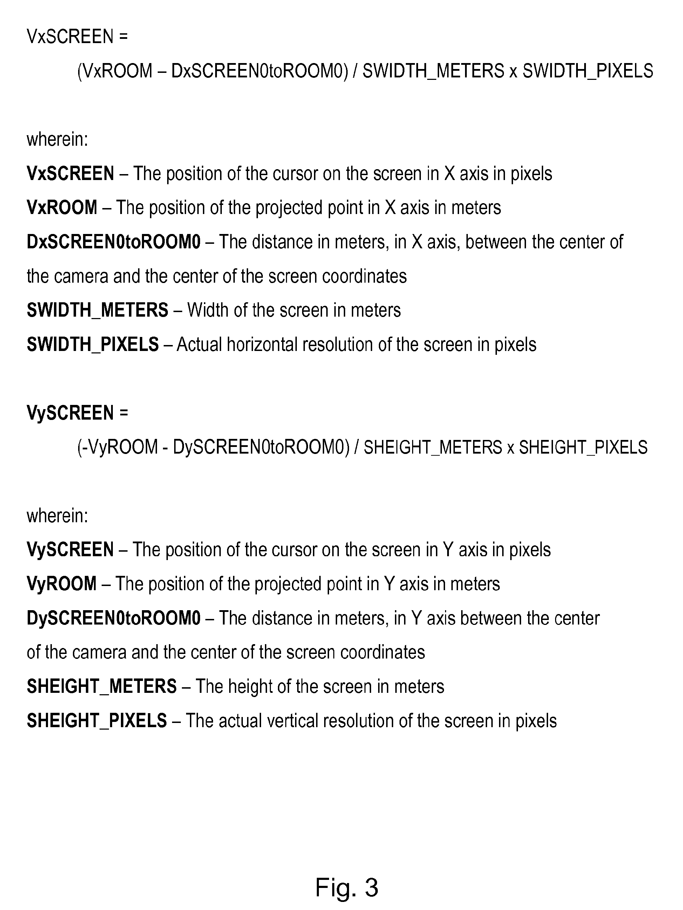

Fig.3 shows the projection of the coordinates of the intersection of the three-dimensional space to the coordinates of the two-dimensional surface of the device. It is important to define an appropriate transformation between these two coordinate systems. For this purpose, a point may be defined, in the coordinate system of the monitored region, which is projected on the front plane of the device 101 or the screen 102, which has a Z coordinate in the three-dimensional system equal to 0. Next, the dependencies depicted in Fig. 3 may be applied.

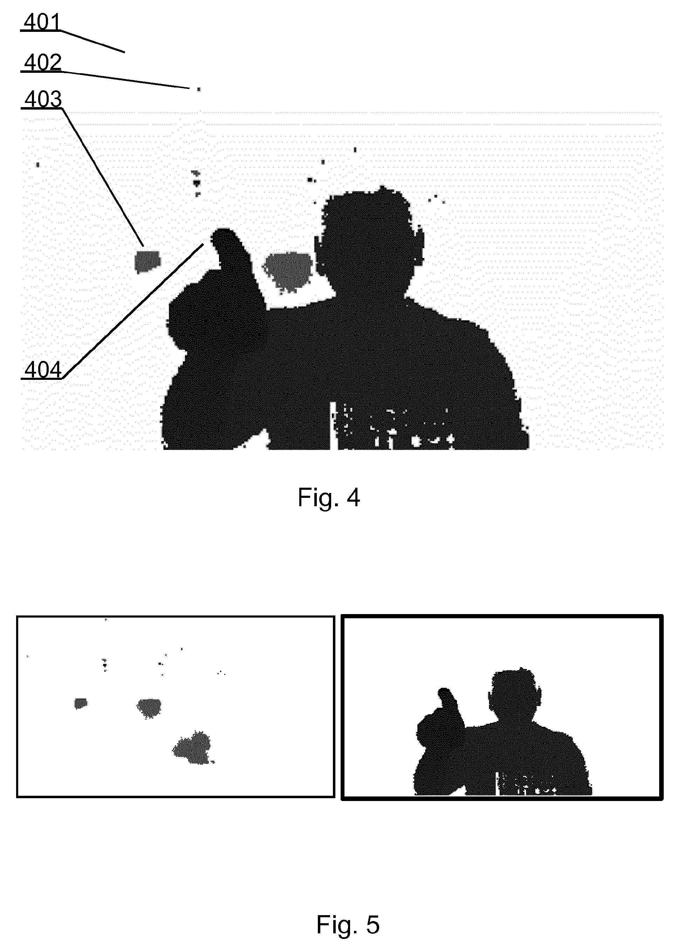

Fig. 4 shows an example of a depth map 401 including a user's index finger tip 404. The image comprises elements which should be considered as noise and which may be filtered out 402, 403.

The proposed solution of filtering out dept information that is not relevant is based on subtraction of the reference data. As a result, data having depth smaller than in the reference image remains. A resulting image can be that on the right side of Fig. 5, having subtracted reference data.

Fig. 6 shows a method for detecting the tip of the index finger or of the pointer. The process starts in step 601, wherein points of the depth map with values smaller than a predefined threshold with respect to the calculated eye position are read. Next, in step 602, the closest point with respect to the camera is determined and the threshold value in the Z axis is added to it. The threshold value in the Z axis may be for example equal from 180cm to 200cm, which defines the region of interest. Next in step 603 the point, with a low value in the Y axis, located in the bottom back (down-back point) is found. If there are more of such points, the point with the highest value in the Z axis may be selected. In step 604, the point which is farthest away from the down-back point and all other points of the scope is selected. For this purpose, different weights of calculations for the values in the Z and Y axis may be used, as shown below.

In order to select the distance between the down-back point and other points in the region of interest, the following formula can be used to scale the distance Y and Z:

$$d_{OUTPUT} = (PX_{DOWN\text{-}BACK} - PX_{CURRENT})^2 + ((PY_{DOWN\text{-}BACK} - PY_{CURRENT}) \times wy)^2 +$$
$$((PZ_{DOWN\text{-}BACK} - PZ_{CURRENT}) \times wz)^2$$

wherein:

$d_{OUTPUT}$ is the resultant, scaled distance between the down-back point and the considered point;
$PX_{DOWN\text{-}BACK}$ is the position of the down-back point in the X axis in the coordinates of the monitored region, expressed in meters;
$PY_{DOWN\text{-}BACK}$ is the position of the down-back point in the Y axis in the coordinates of the monitored region, expressed in meters;
$PZ_{DOWN\text{-}BACK}$ is the position of the down-back point in the Z axis in the coordinates of the monitored region, expressed in meters;
$PX_{CURRENT}$ is the position of the considered point in X axis in the coordinates of the monitored region, expressed in meters;
$PY_{CURRENT}$ is the position of the considered point in Y axis in the coordinates of the monitored region, expressed in meters;
$PZ_{CURRENT}$ is the position of the considered point in Z axis in the coordinates of the monitored region, expressed in meters;
$wy$ is the weight of the scale of difference Y; this value should be in the range 1.0 to 2.0;
$wz$ is the weight of the scale of difference Z; this value should be 1.5 to 3.0 times bigger than the weight $wy$.

The weights wy and wz should be preferably defined as parameters in the user interface of the controlled device 101.

Fig. 7 shows examples of results of the method according to Fig. 6. Fragments of the depth map show the region of interest filtered in step 602 and the points of the fingertip found in step 604 (designated as black squares): the point 701 closest with respect to the camera, the down-back point 702, and the point 703 which is farthest away from the down-back point.

In other embodiments, techniques improving the accuracy of cursor control may be used. The finger obscures a significant portion of the screen, therefore to increase the accuracy, two fingertips of the fingers formed in a shape of a letter V may be detected. Then, two straight lines may be determined and the cursor may be placed between the points of their intersection with the screen 102. Another solution may be to place the cursor slightly above the real point of intersection of the straight line with the plane of the screen, so that the user may see the cursor better on the screen.

It can be easily recognized, by one skilled in the art, that the aforementioned method and system may be performed and/or controlled by one or more computer programs. Such computer programs are typically executed by utilizing the computing resources in a computing device, which can be incorporated in various devices, such as personal computers, personal digital assistants, cellular telephones, receivers and decoders of digital television, TVs, displays or the like. Applications are stored on a non-transitory medium. An example of a non-transitory medium is a non-volatile memory, for example a flash memory or volatile memory, for example RAM. The computer instructions are executed by data processing unit, such as a processor. These memories are exemplary recording media for storing computer programs comprising computer-executable instructions performing all the steps of the computer-implemented method according the technical concept presented herein.

**Claims**

1.  A method for controlling a device (101) by user gestures, the device (101) comprising a processing unit (110) connected to a sensor (103) configured to measure a depth of a monitored region in front of the device (101), the method being **characterized by** performing the following steps by the processing unit (110):

    - determining a detection plane (102) for the device (101) in a three-dimensional space;
    - acquiring an image of the monitored region received from the sensor (103);
    - determining, in the acquired image, a first reference point (106, 107) and its position in the three-dimensional space;
    - determining, in the acquired image, a second reference point (105, 108) and its position in the three-dimensional space;
    - generating a straight line that passes through the first reference point (106, 107) and the second reference point (105, 108); and
    - checking if the straight line intersects the detection plane (102) and if so, calling a command for the controlled device (101).

2.  The method according to claim 1, **characterized in that** the detection plane (102) corresponds to a screen surface of the controlled device (101).

3.  The method according to any of previous claims, **characterized in that** the first reference point (106, 107) is a position of a pupil, a position of a dominant eye or a position of a user.

4.  The method according to any of previous claims, **characterized in that** the second reference point (105, 108) is a tip of an index finger or of a pointer.

5.  The method according to any of previous claims, **characterized in that** it further comprises projecting intersection coordinates in the three-dimensional space on two-dimensional coordinates of the detection plane (102).

6.  The method according to claim 5, **characterized in that** it further comprises sending the two-dimensional coordinates to the controlled device (101).

7.  The method according to any of previous claims, **characterized by** detecting the first reference point on the basis of Haar-like features.

8.  A system for a controlling a device (101) by user gestures, wherein the device (101) comprises a processing unit (110) connected to a sensor (103) configured to measure a depth of a monitored region in front of the device, **characterized in that** the processing unit (110) is configured to performing the steps of the following method:

    - determining a detection plane (102) for the device (101) in a three-dimensional space;
    - acquiring an image of the monitored region received from the sensor (103);
    - determining, in the acquired image, a first reference point (106, 107) and its position in the three-dimensional space;
    - determining, in the acquired image, a second reference point (105, 108) and its position in the three-dimensional space;
    - generating a straight line that passes through the first reference point (106, 107) and the second reference point (105, 108); and
    - checking if the straight line intersects the detection plane (102) and if so, calling a command for the controlled device (101).

9.  The system according to claim 8, **characterized in that** the sensor (103) comprises a TOF camera and an RGB camera.

**10.** The system according to any of claims 8-9, **characterized in that** the sensor (103) comprises a stereoscopic camera.

103

101

110

102

104

Sensor

Controlled Device

Processing unit

Screen

109

108

105

106

107

Fig. 1

201 → Acquire depth data of the background

202 → Acquire depth data of the monitored region

203 → Acquire actual image from the RGB camera

204 → Subtract the background depth data from the monitored region depth data

210 → Send the coordinates to the controlled device

205 → Detect the first point of reference for example position of eyes

209 → If the straight line intersects the surface of the device then the intersection coordinates of 3D space are projected on the coordinates of 2D surface of the device

206 → Calculate the 3D position of the eye/eyes

207 → Detect the second reference point e.g. the tip of the finger or of the pointer

208 → Project the virtual straight line intersecting the first and the second reference point

Fig. 2

VxSCREEN =

$\quad$ (VxROOM – DxSCREEN0toROOM0) / SWIDTH_METERS x SWIDTH_PIXELS

wherein:

**VxSCREEN** – The position of the cursor on the screen in X axis in pixels

**VxROOM** – The position of the projected point in X axis in meters

**DxSCREEN0toROOM0** – The distance in meters, in X axis, between the center of the camera and the center of the screen coordinates

**SWIDTH_METERS** – Width of the screen in meters

**SWIDTH_PIXELS** – Actual horizontal resolution of the screen in pixels

**VySCREEN =**

$\quad$ (-VyROOM - DySCREEN0toROOM0) / SHEIGHT_METERS x SHEIGHT_PIXELS

wherein:

**VySCREEN** – The position of the cursor on the screen in Y axis in pixels

**VyROOM** – The position of the projected point in Y axis in meters

**DySCREEN0toROOM0** – The distance in meters, in Y axis between the center of the camera and the center of the screen coordinates

**SHEIGHT_METERS** – The height of the screen in meters

**SHEIGHT_PIXELS** – The actual vertical resolution of the screen in pixels

# Fig. 3

401

402

403

404

Fig. 4

Fig. 5

601

Read points of the depth map with values smaller than the predefined threshold with respect to the calculated eye positon

602

Determine the closest point with respect to the camera and add the threshold value in the Z axis

603

Determine the point with low value in the Y axis, located in the down back

604

Select the point farthest away from the down-back point and all other points of the scope

Fig. 6

703

701

702

703

701

702

701

703

702

Fig. 7

Europäisches Patentamt

European Patent Office

Office européen des brevets

# EUROPEAN SEARCH REPORT

Application Number

EP 16 15 6968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/190538 A1 (POINTGRAB LTD [IL]) 27 December 2013 (2013-12-27) * abstract * * paragraph [0015] - paragraph [0046] * * figures 1A-1D * | 1-10 | INV. G06F3/01 G06K9/46 |
| X | EP 2 677 398 A2 (VTOUCH CO LTD [KR]) 25 December 2013 (2013-12-25) * abstract * * paragraph [0007] - paragraph [0018] * * paragraph [0035] - paragraph [0045] * * figures 1-2c * | 1-10 | |
| X | US 2014/375547 A1 (KATZ ITAY [IL] ET AL) 25 December 2014 (2014-12-25) * abstract * * paragraph [0054] - paragraph [0095] * * figures 1-3 * | 1-10 | |

TECHNICAL FIELDS SEARCHED (IPC)

G06F
G06K

The present search report has been drawn up for all claims

| Place of search | Date of completion of the search | Examiner |
|---|---|---|
| The Hague | 29 June 2016 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 6968

This annex lists the patent family members relating to the patent documents cited in  the above-mentioned European search report.
The members are as contained in the European Patent Office EDP file on
The European Patent Office is in no way liable for these particulars which are merely given for the purpose of information.

29-06-2016

| Patent document cited in search report | | | Publication date | Patent family member(s) | | | Publication date |
|---|---|---|---|---|---|---|---|
| WO 2013190538 | A1 | | 27-12-2013 | US | 2013343607 | A1 | 26-12-2013 |
| | | | | WO | 2013190538 | A1 | 27-12-2013 |
| EP 2677398 | A2 | | 25-12-2013 | CN | 103380408 | A | 30-10-2013 |
| | | | | EP | 2677398 | A2 | 25-12-2013 |
| | | | | KR | 101151962 | B1 | 01-06-2012 |
| | | | | US | 2012206333 | A1 | 16-08-2012 |
| | | | | WO | 2012111976 | A2 | 23-08-2012 |
| US 2014375547 | A1 | | 25-12-2014 | CN | 104471511 | A | 25-03-2015 |
| | | | | US | 2014375547 | A1 | 25-12-2014 |
| | | | | WO | 2013136333 | A1 | 19-09-2013 |

EPO FORM P0459

For more details about this annex : see Official Journal of the European Patent Office, No. 12/82